# EUROPEAN PATENT SPECIFICATION

(11) **EP 3 791 981 B1**
(45) Date of publication and mention of the grant of the patent: **26.07.2023**
(21) Application number: 20194036.8
(22) Date of filing: 02.09.2020
(51) Int. Cl.: B23B 51/08, B23C 3/30, B23C 5/10, B23D 67/06, E05B 17/00

(54) **BURR AND METHOD**
FRÄSER UND VERFAHREN
FRAISE ET PROCEDE

(30) Priority: 10.09.2019 GB 201913005
(43) Date of publication of application: 17.03.2021
(73) Proprietor: Souber Tools Limited, Neston, Cheshire CH64 3UZ (GB)
(72) Inventor: Souber, Paul Mark, Neston, Cheshire CH64 3UZ (GB)
(74) Representative: Dolleymores

(56) References cited:
- EP-A1- 3 006 176
- DE-U1- 8 305 804
- US-A1- 2017 245 958

## Description

The present invention relates to a burr according to the preamble of claim 1. Such a burr is known from WO2011/036439A1.

Moreover, the invention relates to a method of drilling a pin cylinder lock according to the preamble of claim 14.

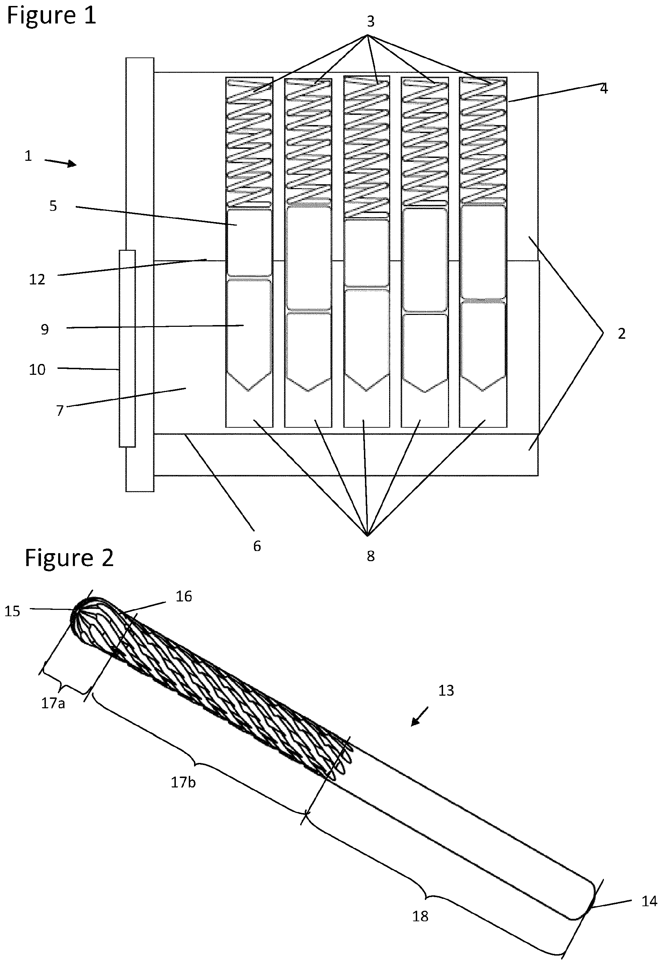

The basic components of a cylinder lock are illustrated in Figure 1, where a cylinder lock, indicated generally as 1, comprises a cylinder 2, normally to be indirectly fixed to a door or other item. The cylinder 2 has a number (typically 5 or 6) first chambers 3 machined in to it, each first chamber comprising a respective spring 4 and captive top pin (or driver pin) 5. The cylinder 2 has an axial cylindrical hole 6 extending therethrough in which is inserted a plug 7. The plug 7 is also cylindrical and may thus rotate in the cylindrical hole 6 in the cylinder 2. The plug 7 has a plurality of second chambers 8 machined in it, which may all be simultaneously aligned with respective corresponding first chambers 3 in the cylinder 2. Each second chamber 8 houses a respective bottom pin (or plug pin) 9.

The top pins 5 and bottom pins 9 are of various different lengths, as shown, with the bottom pins 9 also being captive and arranged such that they are retained, in the absence of a key, in the position shown in Figure 1, where the top pins protrude from the first chambers 3, in the cylinder 2, into the second chambers 8, in the plug 7, preventing the plug 7 rotating in the cylinder 2.

On insertion of a key (not shown) through a first end 10 of the plug 7, the key slides under and raises the bottom pins 9. The correct key is profiled such that it may pass under all the pairs of pins 5, 9 until it is fully inserted in the lock 1. At this point, each of the bottom pins 9 will be raised sufficiently so that the boundary between each respective pair of top pins 5 and bottom pins 9 is aligned with the boundary between the outer surface of the plug 7 and the inner surface of the cylindrical hole 6 in the cylinder 2, along a line intersecting the first chambers 3 and second chambers 8, which line is referred to as the shear line 12.

With the pins correctly aligned, such that the boundary between respective top pins 5 and bottom pins 9 lies along the shear line 12, the key (not shown) may be used to rotate the plug 7, whereby the action of the rotating plug may be used to unlock a mechanical locking device (not shown) linked to the plug 7.

If a key is not available for opening a cylinder lock 1 of the type illustrated in Figure 1, such a lock may often be capable of being picked, but this is typically a very skilled and time consuming process. Thus, if it is permissible to destroy the cylinder lock 1, which will normally form a replaceable part in a larger assembly, then a locksmith will typically drill along the shear line 12 and thus drill along a line which intersects and removes the top pins 5, or at least a portion of the top pins 5, clearing the shear line from obstructions and thus subsequently permitting the plug 7 to be turned in the cylinder 2.

Known products that may be employed by a locksmith for drilling a cylinder lock, in the manner described above, comprise tungsten carbide tipped drills, solid tungsten carbide drills or tungsten carbide burrs. A suitable tungsten carbide tipped drill is similar to, or may be, a tungsten carbide tipped "masonry drill", comprising a sharp diamond ground tungsten carbide tip in a helically fluted hardened steel shank.

A tungsten carbide tool, or tungsten carbide tipped tool, is required because although the cylinder 2 and plug 7 of a lock 1 may be formed of relatively soft materials, for example brass, the pins 5, 9 may be formed from a relatively hard material, such as hardened steel.

One advantage of using a drill, with a tungsten carbide insert, is that the insert is relatively small compared to the rest of the drill. Therefore the drill bit may be relatively cheap, comprising only a small insert of the far more expensive tungsten carbide. Another advantage of using this type of drill is that the shank is normally fluted and this acts to transfer debris from the cutting face back along the drill, reducing the likelihood of the drill jamming. In addition, the steel shaft is relatively flexible and thus less likely to snap than a one piece tool made totally from tungsten carbide.

A disadvantage of a tungsten carbide tipped drill bit is that, although the tungsten carbide is very hard, it is also relatively brittle and thus the insert in the form of a small chunk of material embedded in the end of a steel drill bit may break on impacting a relatively hard pin, or it may be displaced from the end of the drill shaft, particularly when encountering a moveable, potentially harder element, in the form of a displaced drill pin, which may act to snag the tungsten carbide insert. This is particularly a problem, for the insert effectively forms a paddle extending across the bottom of the drill shaft which is relatively easy to jam against a displaced pin. This all acts to considerably shorten the life of tungsten carbide tipped drill bits and such a drill bit may typically only drill one or two locks and may not even be capable of that, particularly if a lock has an anti-drill feature embedded in it.

In addition to the above, the face of the tungsten carbide insert generally resembles that of a normal tungsten carbide insert in a masonry drill, comprising only two cutting faces. This requires that the drill run relatively slowly and such a drill will typically be used in a cordless drill and operate at about 1,000 rpm. This requires a very high level of pressure to be applied, particularly when a "hard pin" is encountered, making it a slow, tedious and not always conclusive process.

As a more expensive alternative to using a tungsten carbide tipped drill, a solid drill bit made from a single piece of tungsten carbide may be used, which again would typically be used in a cordless drill rotating at approximately 1,000 rpm. Such a drill may have one or two cutting faces at its distal end, not dissimilar to a conventional high speed steel drill bit. However, such drill bits cannot be helically fluted like a steel drill shank, but instead the shank may have square faces ground into it, which act to provide a space through which debris can be cleared from the cutting face of the drill bit. However, unlike the case of a fluted drill shank, rotating the drill will not induce the flow of debris back along the shank.

As a solid piece of tungsten carbide, a solid tungsten carbide drill bit is significantly stronger than the above mentioned tungsten carbide tipped drill bit and the tip is very resilient in use. However, such one piece tungsten carbide drill bits also have several disadvantages.

One piece tungsten carbide drill bits again require a high level of pressure in use, particularly when a hard pin is encountered, for they again only have one or two cutting surfaces on their distal face and have to run at relatively low speeds. They are also a lot more expensive to produce, due to the high cost of the tungsten carbide material from which each is formed and the costs involved in machining this material. This would not be such a problem if the drill bit had a relatively long life expectancy, but this is not normally the case when used to drill cylinder locks.

A solid tungsten carbide drill, like the tungsten carbide tipped drill bit only cuts on its front face and can therefore only be used to drill a straight linear hole. However unlike the tungsten carbide tipped drill bit, with a relatively flexible steel shaft, the solid tungsten carbide drill is not flexible and in comparison is relatively brittle. Thus, if used in a handheld cordless drill or similar, normally necessary when used on site and thus typical in such applications, if the angle at which the drill is inclined varies during use, the one piece tungsten carbide drill bit is prone to snap, not only then requiring an expensive replacement, but also making it very difficult to subsequently drill the same lock with a new drill. This problem is further compounded as a result of such drill bits having a tendency to jam or snatch when encountering a pin, particularly if the pin becomes dislodged, or when the debris from the drill face fails to clear and binds against the shaft of the drill.

A third alternative tool which has sometimes been used to drill a cylinder lock is a burr formed of tungsten carbide. These are used by engineers and particularly tools makers for making dies for tooling, such as for machining injection mould tooling. These are normally cylindrical in shape and have cutting teeth formed at the distal end of the tool, which cutting teeth not only extend part way along the side of the cylindrical body, to enable the tool to be moved sideways in the manner of a milling machine, but which also extend over a distal end face, enabling the tool to act as a drill to make an initial hole in an item to subsequently be machined. Such burrs are usually made commercially in sizes having diameter of either 3mm or 6mm, to suit either Dremel^{®} type rotary machines or die grinder machines, respectively.

The smaller, 3mm diameter tungsten carbide burrs, are normally formed from a solid tungsten carbide rod blank. These have very limited working lengths due to the shapes available and typically have a maximum length of 50mm or 60mm, as a result of them being made from solid tungsten carbide which can break relatively easily.

In contrast to the drills described above, instead of having an end cutting face in the form of a conventional drill bit, burrs have a very great number of relatively fine teeth machined on their outer surface. Because the overall length of the burrs in normally only 50mm or 60mm the working surface or the area over which the teeth extend is only typically between 10mm to 14mm along the length of the burr. Due to the very fine nature of the teeth on the burr, compared to the above described drills, a burr is less likely to jam than a drill bit when biting into a pin of harder material than the material of the surrounding lock, or when biting into a pin which may be momentarily displaced, which may cause a drill bit to jam against it rather than scrape away the material of the pin. In effect burrs act more like a grinding surface than a drill and can be operated at very high speeds, typically between 25,000 rpm and 30,000 rpm. For the above reasons, some locksmiths have been known to use such burrs to drill cylinder locks of the aforementioned type, particularly when such locks may have hardened anti drill feature embedded in them.

One problem with using solid tungsten carbide burrs of the above mentioned type, is that the burr will normally be used to drill a straight hole along the shear line, which hole is the same diameter as the burr. Thus as the hole becomes deeper the burr is more likely to snap as a result of any slight misalignment between the Dremel^{®} or other machine powering the burr and the hole formed by the burr, which machine is likely to be hand held.

It is an object of the present invention to provide an improved device suitable for use in the drilling of a cylinder lock.

According to the present invention there is provided a tungsten carbide burr according to claim 1.

A tungsten carbide burr in accordance with the present invention, having a cutting portion which comprises a distal end portion having a diameter greater than the diameter of a cylindrical cutting portion, offers significant advantages over the aforementioned drill and burr types.

In common with the previously described tungsten carbide burr, a tungsten carbide burr in accordance with the present invention offers the advantages of having very fine teeth which are less likely to engage and jam with a pin than a tungsten carbide tipped drill bit, or conventional solid tungsten carbide drill. However, with a burr in accordance with the present invention, the increased diameter of the distal end portion leaves a clearance between the following cylindrical portion of the cutting portion and the wall of the hole being drilled. This clearance provides accommodation for debris generated by the distal end portion, avoiding the likelihood of this material acting to jam the burr. Furthermore, the provision of teeth on this cutting portion of reduced diameter can act to feed material along the space formed between the cylindrical cutting portion and the wall of the hole being drilled, further avoiding the likelihood of this material jamming the burr, which again could result in the burr breaking.

More significantly, this clearance also accommodates minor, but significant, changes in alignment during drilling, making it far less likely that the burr will snap due to an unintentional change in alignment. This is further enhanced by the cylindrical portion of the cutting portion having teeth, for should the alignment of burr change sufficiently such that the change can no longer be accommodated by the clearance provided behind the distal end portion, then the cylindrical cutting portion itself may then cut into the lock, thus accommodating the change in the inclination of the burr.

This clearance is also advantageous when a pin or some other obstacle, such as a hardened anti-drilling component in the lock, is encountered. This is because the clearance behind the distal end portion may permit the larger diameter distal end portion to be deflected around an obstacle, with the distal end portion being able to via slightly off its original course to follow a path of least resistance, cutting into softer material and thus avoiding the likelihood of jamming against a particularly hard material, or an item such as a pin which may move or otherwise act to jam the burr. Again, here the cylindrical portion of the cutting portion may accommodate further deflection of the distal end portion, for the cylindrical portion of the cutting portion may itself then cut sideways into the material of the lock. However, because the diameter of the distal end is greater than that of the cylindrical portion, the point of greatest lateral resistance encountered by the burr is likely to be at the distal end, where more material has to be cut to accommodate any lateral movement. This thus reduces the lateral forces exerted behind the distal end portion, which forces could otherwise act to snap the burr. Thus, a burr in accordance with the present invention has been found far less likely to jam and subsequently snap than known burrs when used for drilling a lock.

The cutting portion may preferably extend from the distal end to a shaft portion, devoid of teeth, which shaft portion extends to the proximal end of the burr. This avoids the need and expense of machining teeth along the entire burr and provides a smooth outer surface on the burr which helps to ensure the burr is correctly mounted in a chuck or other device.

The shaft portion may be of the same diameter as the first diameter or it may be of a greater diameter than the first diameter, possibly the same diameter as a maximum diameter of the distal end portion, for this may reduce the amount of material that has to be removed during machining of the burr. This enlarged shaft portion may also permit the diameter of the shaft portion to be matched to particular tools, such as for example a Dremel^{®}, similar rotary tool or die grinder, which may be arranged to receive only shafts of a certain diameter.

Preferably, the distal end portion of the cutting portion is tear drop shaped, gradually increasing from a first diameter where it adjoins the cylindrical cutting portion to a maximum diameter, from where the diameter may decrease, preferably to form a ball end having a hemispherical profile. This avoids any sudden change in diameter which may result in a point of weakness on the burr.

Preferably, the distal end portion of the cutting portion is less than 0.2 times the length of the cylindrical portion of the cutting portion. Having a relatively short distal end portion of increased diameter, relative to the length of the cylindrical cutting portion, acts to minimise the stresses on the burr that may other be caused, as only so much work can be done by the relatively short distal end portion, which when drilling straight will perform all the cutting. Furthermore, the relatively short length of the distal end portion of the cutting portion means that it is unlikely to exert significant forces on the remainder of the burr as the angle of the burr is changed.

The burr may be formed by grinding a single tungsten carbide rod, to form a blank having a cylindrical portion of the first diameter to subsequently form the cylindrical cutting portion and to form a distal end portion having a second diameter greater than the first diameter, to subsequently form the distal end cutting portion, and then cutting the teeth into the blank to form the cutting portions.

The burr may advantageously have a cutting portion which extends more than 25mm from the distal end or more than 28mm from the distal end. The advantage of this is that, for a five pin lock, the pins are normally located to a maximum depth of 24mm in from an end face of the plug or cylinder and, in the case of a six pin lock, they are normally located to a maximum depth of 27mm in from an end face of the plug or cylinder. Thus, a burr having a cutting portion which extends more than 25mm, or more than 28mm, may permit the lock to be drilled to the depth of the furthest pin, with only the cutting portion of the burr entering the lock. This offers two major advantages.

A first advantage of this is that if the angle of inclination varies significantly then, as all the portion of burr accommodated in the lock comprises the cutting portion, the cutting portion may cut itself sideways to accommodate the change in angle of inclination, greatly reducing the likelihood of the burr snapping.

A second major advantage of this is that this may enable a locksmith to drill into a cylinder lock along the axis of the lock and then move the burr sideways. This is possible because the provision of many fine teeth along the length of the burr rotating at very high speeds, for example at speeds in excess of 25,000 rpm, may enables a significant amount of material to be cutaway in a relatively short period of time, making it possible for a locksmith not only to drill axially into the lock along the shear line, but to drill into the lock, (possibly along the path of least resistance following the key hole) and then to move the burr sideways to make a slot in the lock, the slot extending sideways in the direction of the pins. This is possible as a result of the enlarged distal end cutting portion making the burr far more manoeuvrable, permitting the locksmith to move the burr laterally without fear of the burr jamming and breaking due to any change in alignment of the burr that may occur.

The forming of a slot below the pins of the lock of Figure 1, and then extending that slot upwards to encounter the pins, has been found to permit the pins to be ejected from the lock without the need to drill through them along the shear line, as is conventional practice. This has been found to permit the procedure of drilling the lock to be performed with far less precision and far greater speed than has ever previously been possible, permitting the practice to be performed by less experienced staff.

In order to provide a suitable clearance it is advantageous if the second diameter is between 1.08 and 1.12 times that the first diameter.

The burr has a first diameter between 2.8mm and 3.2mm with, for example, an overall total length of between 45mm and 65mm.

According to the invention, the burr is formed from tungsten carbide.

According to a second aspect of the invention there is provided a method of drilling a pin cylinder lock according to claim 14.

Three embodiments of the present invention will now be described, by way of example only, with reference to the accompanying drawings, of which:
Figure 1 illustrates the principle components of a cylinder lock;
Figure 2 is a perspective view of a 3mm burr in accordance with a first embodiment of the present invention;
Figure 3 is a side elevation of a blank from which the burr of Figure 2 is to be formed;
Figure 4 is a side elevation of the burr of Figure 2;
Figure 5 is a view of the distal end of the burr of Figures 2 and 4;
Figure 6 is a perspective view of a 6mm burr in accordance with a second embodiment of the present invention;
Figure 7 is a side elevation of a blank from which the burr of Figure 6 is to be formed;
Figure 8 is a side elevation of the burr of Figure 6;
Figure 9 is a view of the distal end of the burr of Figures 6 and 8;
Figure 10 is a perspective view of a 3mm burr in accordance with a third embodiment of the present invention;
Figure 11 is a side elevation of a blank from which the burr of Figure 10 is to be formed;
Figure 12 is a side elevation of the burr of Figure 10;
Figure 13 is a view of the distal end of the burr of Figures 10 and 12; and
Figures 14A to 14D illustrate one way in which a burr in accordance with any of Figures 2, 6 or 10 may be used to "drill" the cylinder lock of Figure 1.

All dimensions shown in the figures are in millimetres.

The known cylinder lock of Figure 1 and the working thereof, has previously been described in the introduction of the present specification.

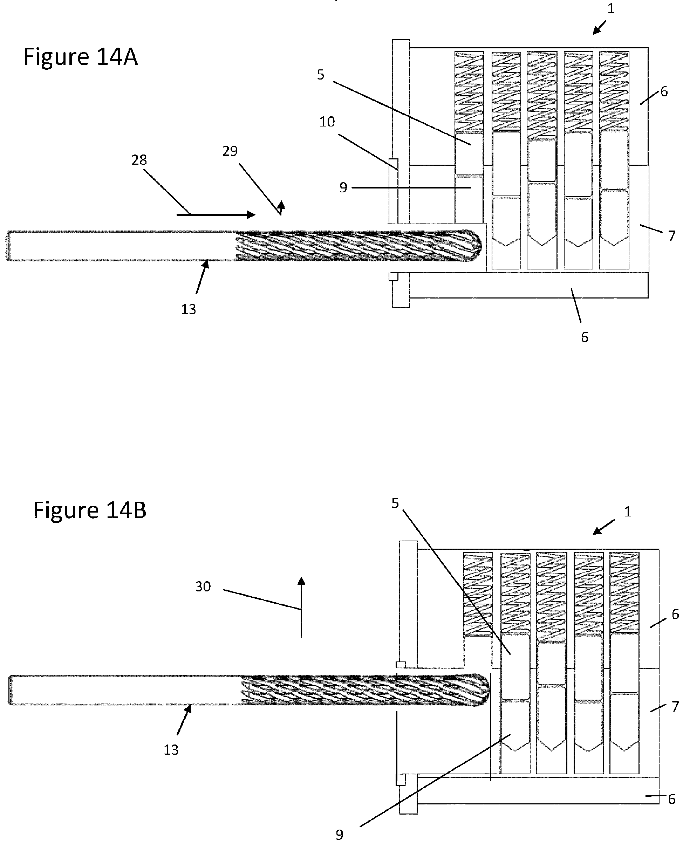

Referring now to Figure 2, a burr 13 in accordance with the present invention is illustrated which may be used to "drill" the cylinder lock of Figure 1, as described later with reference to Figures 14A to 14D. The burr 13 is formed of tungsten carbide and is in the form of a rod having a proximal end 14 and a distal end 15. A plurality of cutting teeth 16 extend from the distal end 15 to approximately half way along the burr and these define a cutting portion 17a, 17b of the burr 13. The remaining portion of the burr 13 does not have teeth formed on it and this forms an engagement portion 18, to engage with a chuck, or similar, of a tool such as a Dremel^{®}, similar rotary tool or die grinder, which typically will rotate the burr at speeds in the range of 25,000 to 30,000 rpm.

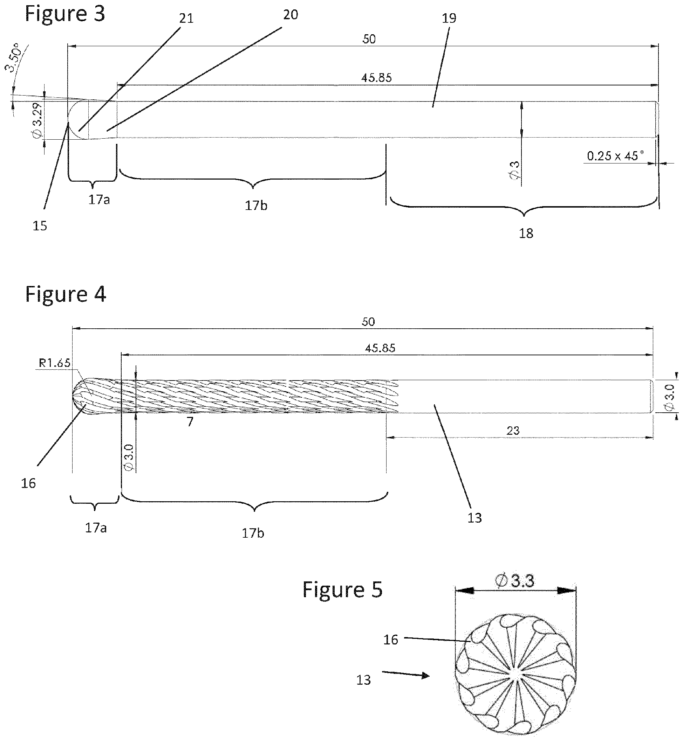

The burr 13 of Figure 2 can be formed by grinding a 3.3mm diameter rod of tungsten carbide into a blank 19, as illustrated in Figure 3.

The blank 19 comprises a cylindrical portion of 3mm diameter which forms a first portion 17b of the cutting portion 17a, 17b and the engaging portion 18. Towards the distal end 15 the rod is machined to form an outwardly tapered portion 20 and a hemispherical distal end 21 of the blank 19, the tapered portion 20 and hemispherical distal end 21 forming a generally tear drop shape having a maximum diameter of 3.3mm. Once the blank 19 of Figure 3 has been formed, the cutting teeth 16 are then cut into this, as illustrated in Figures 4 and 5, to produce the burr as illustrated in Figure 2.

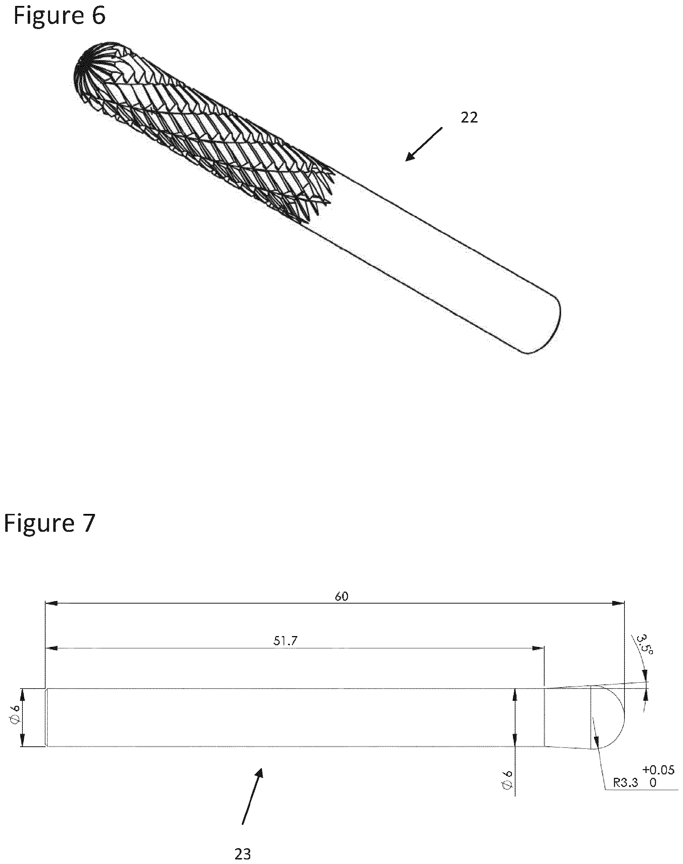

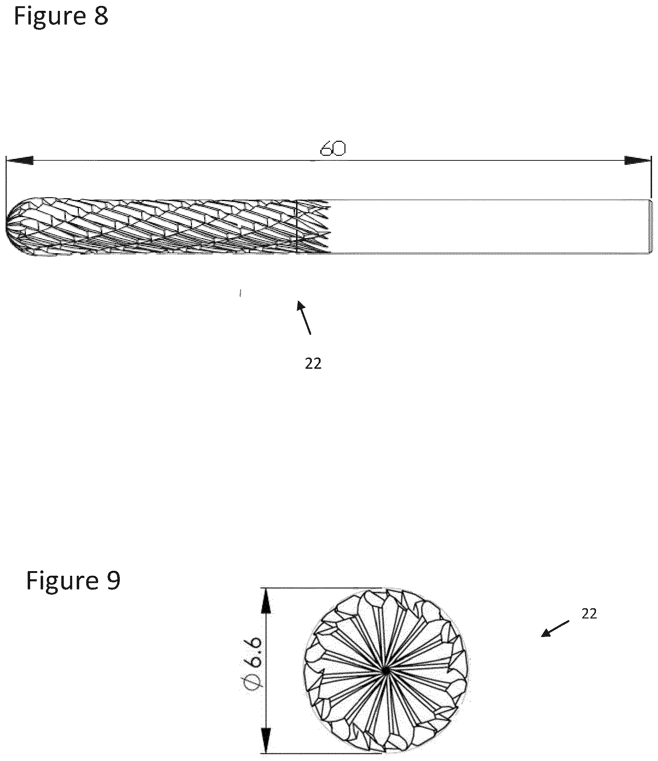

Referring now to Figures 6 to 9, these figures correspond to the views shown and described previously with reference to Figures 2 to 5, but in Figures 6 to 9 a burr 22 having a maximum diameter of 6.6mm is illustrated. Except for the dimensions, the burr 22 is identical to the burr 13 of Figures 2 and is formed in exactly the same manner, here the blank 23, illustrated Figure 7 being ground from a tungsten carbide rod having a diameter of 6.6mm.

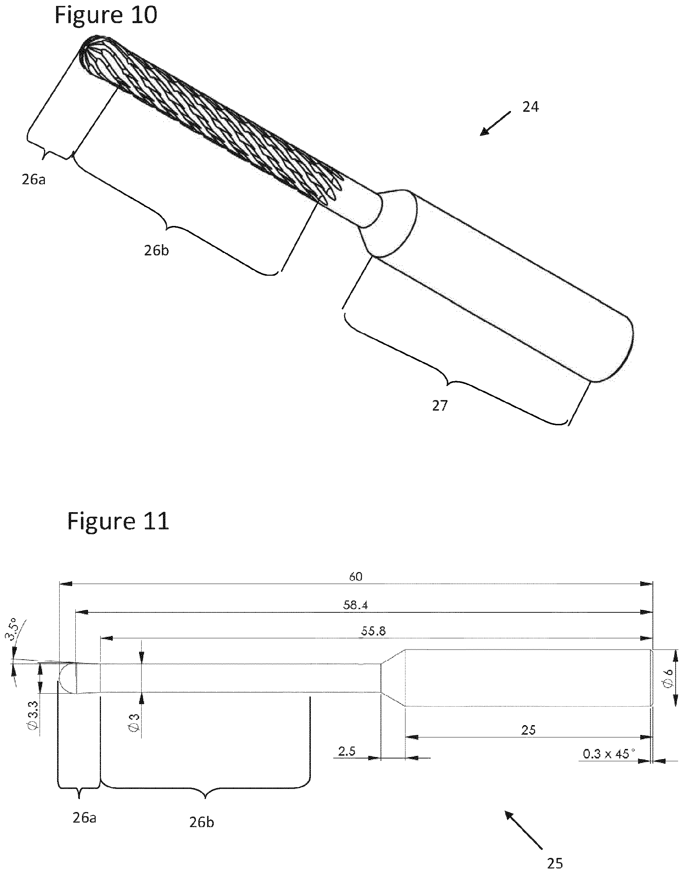

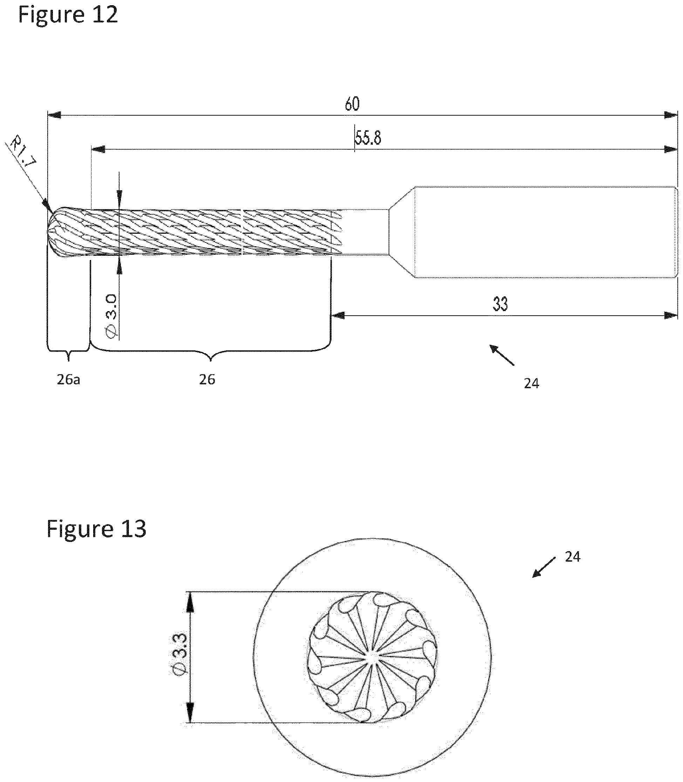

Figures 10 to 13 are views which again correspond to the views of Figures 2 to 5, but these illustrate a burr 24 formed from a blank 25 having the dimensions illustrated in Figure 11, to form the burr 24 with a cutting portion 26 having the same dimensions as the cutting portion 17a, 17b of the burr 13 of Figure 2. However the burr 24, illustrated here with reference to Figures 10 to 13, has an engaging portion 27 of 6mm diameter, to enable it to engage with a standard chuck, or similar, of a die grinder or similar device. Apart from this, the burr 24 and the manner of forming it is the same as that previously described with reference to Figures 2 to 5 and Figures 6 to 9.

Referring now to Figures 14A to 14D, there is illustrated a method by which the burr 13 of Figure 2, (or any of the burrs 22 or 24 illustrated in Figures 6 and 10 respectively), may be used to "drill" the cylinder lock of Figure 1.

Referring to Figure 14A, the burr 13, rotated at between approximately 25,000 and 30,000 rpm, is inserted axially in the direction of arrow 28 until it passes below the first of the bottom pins 9. It is then raised vertically in the direction of arrow 29 and this movement is continued, as represented by arrow 30 in Figure 14B, until a large enough slot is created for both the first bottom pin 9 and the first top 5 to be released by the burr 13 and ejected from the lock 1.

A significant point to note here is that, unlike with previous methods, the manoeuvrability provided by the burr 13 having a larger diameter distal end, enables significant sideward pressure on the burr 13 to be applied without fear of the burr 13 snapping by becoming misaligned. Thus a locksmith may be relatively aggressive in using the burr 13, enabling large amounts of material to be cutaway relatively swiftly. This in turn provides a larger space which will often result in the bottom pin 9 and top 5 being ejected from the lock 1, rather than having to be drilled through, although the burr 13 will drill through these pins if they should remain lodged in position or if it is desired to drill along the shear line in the conventional manner.

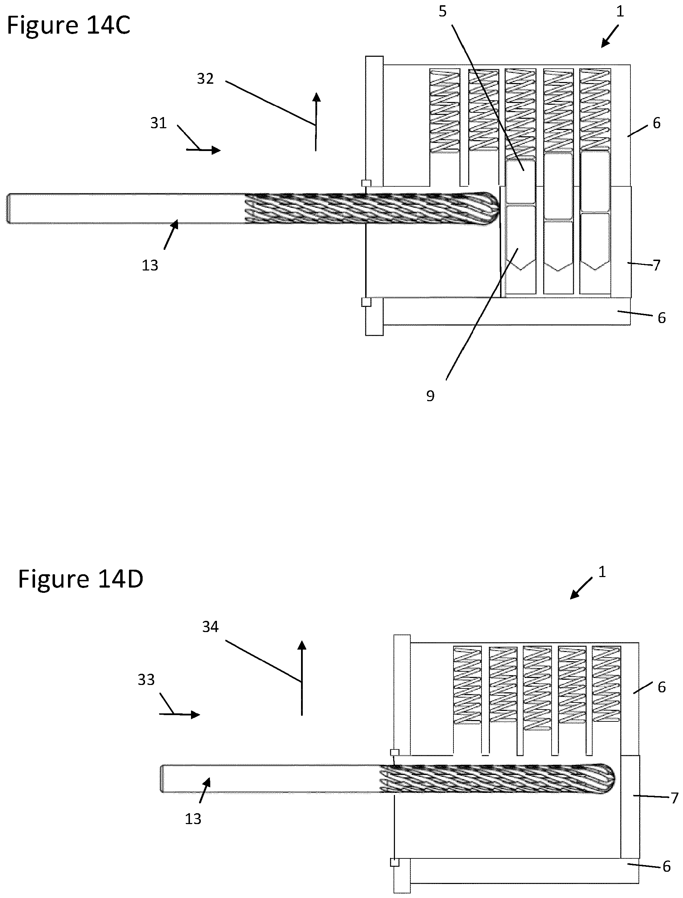

With reference now to Figures 14C and 14D, the burr 13 may now be advanced stepwise in a manner represented by the arrows 31 to 34, until the shear line is drilled and/or all the bottom pins 9 and top pins 5 have been removed, allowing the plug 7 to rotate in the cylinder 6.

How the burr 13 is used to attack the lock 1 may depend on the preference of the locksmith and also the features of the lock, for example anti-drill devices fitted in a lock may be encountered and may tend to deflect the burr 13.

Thus although according to the invention the burr 13 is used in the manner previously described with reference to Figures 14A to 14D, alternatively the burr could be used in the manner of a conventional device to drill straight along the shear line, the clearance provided behind the distal head of the burr making it far easier to use the burr to drill a single hole, requiring far less pressure than with known devices.

As a further alternative example, the burr may be used to drill all the way in through the path of least resistance, following a line a key would follow beneath the bottom pins 9. This may be particularly easy for the burr 13 will automatically centre itself on the recess (not shown) which is normally provided on the first end 10 of the plug 7, to in normal use guide the key into the slot in the plug 7. Once fully inserted the burr may then be moved laterally (vertically as shown in Figures 14A to 14D), to then free or destroy all of the pins 9, 5. The burr may also find applications other than for the drilling of cylinder locks.

Three embodiments of a burr in accordance with the present invention have been described above. However, it will be realised that many additional embodiments are possible within the scope of the following claims.

## Claims

1. A tungsten carbide burr (13) in the form of a generally cylindrical rod, the burr having a proximal end (14) for mounting in a tool for rotating the burr and a distal cutting end (15), the burr having a cutting portion (17a, 17b) defined by a portion of a surface of the burr which comprises a plurality of teeth (16) cut into the surface of the tungsten carbide burr, the cutting portion including and extending from the distal end (15) back towards the proximal end (14), wherein the cutting portion (17a, 17b) comprises a cylindrical portion (17b) of a first diameter in a plane perpendicular to a longitudinal axis of the burr and a distal end portion (17a) of varying diameter in planes perpendicular to a longitudinal axis of the burr, the maximum diameter of the distal end portion in a plane perpendicular to a longitudinal axis of the burr being greater than the first diameter, **characterised in that** the first diameter of the burr is between 2.8mm and 3.2mm and **in that** the portions of the teeth extending proximally from the plane perpendicular to a longitudinal axis of the burr of the distal end cutting portion, where the diameter is a maximum, are slanted with respect to the longitudinal axis of the burr.

2. A burr as claimed in Claim 1, wherein the cutting portion extends from the distal end to a shaft portion, without teeth, which shaft portion extends to the proximal end.

3. A burr as claimed in Claim 2, wherein the shaft portion is the same diameter as the first diameter.

4. A burr as claimed in Claim 2, wherein the shaft portion is of a greater diameter than the first diameter.

5. A burr as claimed in any preceding claim, wherein the distal end portion of the cutting portion is tear drop shaped.

6. A burr as claimed in any preceding claim, wherein the distal end portion of the cutting portion is less than 0.2 times the length of the cylindrical portion of the cutting portion.

7. A burr as claimed in any preceding claim, wherein the burr is formed solely from a single tungsten carbide rod.

8. A burr as claimed in any preceding claim, wherein the burr is formed by grinding a single tungsten carbide rod, to form a blank having a cylindrical portion of the first diameter which is to subsequently form the cylindrical cutting portion and to form a distal end portion having a second diameter greater than the first diameter, which is to subsequently form the distal end cutting portion, wherein the teeth are subsequently cut into the blank.

9. A burr as claimed in any preceding claim, wherein the distal end portion of the cutting portion has a ball end having a hemispherical profile.

10. A burr as claimed in any preceding claim, wherein the cutting portion extends more than 25mm from the distal end.

11. A burr as claimed in any preceding claim, wherein the second diameter is between 1.08 and 1.12 times that of the first diameter.

12. A burr as claimed in any preceding claim, wherein the first diameter is between 5.7mm and 6.3mm.

13. A burr as claimed in any preceding claim, wherein the burr is between 55mm and 65mm in length.

14. A method of drilling a pin cylinder lock (1) **characterised in that** a burr (13) as claimed in any preceding claim is used, the method comprising drilling with the burr (13) into the lock (1) in an axial direction along a line parallel to a line of pins (5, 9) and subsequently moving the burr (13) laterally to form a slot in the region of the pins (5, 9) and aligned with the pins.

## Patentansprüche

1. Wolframkarbidfräser (13) in der Form einer im allgemeinen zylindrischen Stange, wobei der Fräser ein proximales Ende (14) zum Montieren in einem Werkzeug zum Drehen des Fräsers und ein distales Schneidende (15) aufweist, wobei der Fräser einen Schneidabschnitt (17a, 17b) aufweist, der durch einen Abschnitt einer Oberfläche des Fräsers definiert ist, der eine Mehrzahl von Zähnen (16) umfasst, die in die Oberfläche des Wolframkarbidfräsers geschnitten sind, wobei der Schneidabschnitt das distale Ende (15) beinhaltet und sich von diesem zurück in Richtung des proximalen Endes (14) erstreckt, wobei der Schneidabschnitt (17a, 17b) einen zylindrischen Abschnitt (17b) mit einem ersten Durchmesser in einer Ebene senkrecht zu einer Längsachse des Fräsers und einen distalen Endabschnitt (17a) mit variierendem Durchmesser in Ebenen senkrecht zu einer Längsachse des Fräsers umfasst, wobei der maximale Durchmesser des distalen Endabschnitts in einer Ebene senkrecht zu einer Längsachse des Fräsers größer als der erste Durchmesser ist, **dadurch gekennzeichnet, dass** der erste Durchmesser des Fräsers zwischen 2,8 mm und 3,2 mm liegt, und dadurch, dass die Abschnitte der Zähne, die sich proximal von der Ebene senkrecht zu einer Längsachse des Fräsers des distalen Endschneidabschnitts erstrecken, wo der Durchmesser ein Maximum ist, in Bezug auf die Längsachse des Fräsers geneigt sind.

2. Fräser nach Anspruch 1, wobei sich der Schneidabschnitt von dem distalen Ende bis zu einem Schaftabschnitt ohne Zähne erstreckt, der sich bis zu dem proximalen Ende erstreckt.

3. Fräser nach Anspruch 2, wobei der Schaftabschnitt den gleichen Durchmesser wie der erste Durchmesser aufweist.

4. Fräser nach Anspruch 2, wobei der Schaftabschnitt einen größeren Durchmesser als der erste Durchmesser aufweist.

5. Fräser nach einem der vorhergehenden Ansprüche, wobei der distale Endabschnitt des Schneidabschnitts tränenförmig ist.

6. Fräser nach einem der vorhergehenden Ansprüche, wobei der distale Endabschnitt des Schneidabschnitts weniger als das 0,2-fache der Länge des zylindrischen Abschnitts des Schneidabschnitts beträgt.

7. Fräser nach einem der vorhergehenden Ansprüche, wobei der Fräser ausschließlich aus einer einzigen Wolframkarbidstange ausgebildet ist.

8. Fräser nach einem der vorhergehenden Ansprüche, wobei der Fräser durch Schleifen einer einzelnen Wolframkarbidstange ausgebildet ist, um einen Rohling mit einem zylindrischen Abschnitt mit dem ersten Durchmesser auszubilden, der anschließend den zylindrischen Schneidabschnitt ausbilden soll, und um einen distalen Endabschnitt mit einem zweiten Durchmesser auszubilden, der größer als der erste Durchmesser ist, der anschließend den distalen Endschneidabschnitt ausbilden soll, wobei die Zähne anschließend in den Rohling geschnitten werden.

9. Fräser nach einem der vorhergehenden Ansprüche, wobei der distale Endabschnitt des Schneideabschnitts ein Kugelende mit einem halbkugelförmigen Profil aufweist.

10. Fräser nach einem der vorhergehenden Ansprüche, wobei sich der Schneidabschnitt mehr als 25 mm von dem distalen Ende erstreckt.

11. Fräser nach einem der vorhergehenden Ansprüche, wobei der zweite Durchmesser zwischen dem 1,08- und 1,12-fachen des ersten Durchmessers liegt.

12. Fräser nach einem der vorhergehenden Ansprüche, wobei der erste Durchmesser zwischen 5,7 mm und 6,3 mm liegt.

13. Fräser nach einem der vorhergehenden Ansprüche, wobei der Fräser eine Länge zwischen 55 mm und 65 mm aufweist.

14. Verfahren zum Bohren eines Stiftzylinderschlosses (1), **dadurch gekennzeichnet, dass** ein Fräser (13) nach einem der vorhergehenden Ansprüche verwendet wird, wobei das Verfahren das Bohren mit dem Fräser (13) in das Schloss (1) in einer axialen Richtung entlang einer Linie parallel zu einer Linie von Stiften (5, 9) und das anschließende Bewegen des Fräsers (13) seitlich, um einen Schlitz in dem Bereich der Stifte (5, 9) auszubilden, und ausgerichtet an den Stiften umfasst.

## Revendications

1. Fraise en carbure de tungstène (13) sous forme d'une tige globalement cylindrique, la fraise possédant une extrémité proximale (14) pour son montage dans un outil de rotation de la fraise, et une extrémité de coupe distale (15), la fraise possédant une partie de coupe (17a, 17b) définie par une partie d'une surface de la fraise comprenant une pluralité de dents (16) découpées dans la surface de la fraise carbure de tungstène, la partie de coupe comprenant et se rétractant de l'extrémité distale (15) vers l'extrémité proximale (14), la partie de coupe (17a, 17b) comprenant une partie cylindrique (17b) d'un premier diamètre dans un plan perpendiculaire à un axe longitudinal de la fraise, et une partie d'extrémité distale (17a) d'un diamètre variable dans des plans perpendiculaires à un axe longitudinal de la fraise, le diamètre maximum de la partie d'extrémité distale dans un plan perpendiculaire à un axe longitudinal de la fraise étant supérieur au premier diamètre, **caractérisé en ce que** le premier diamètre de la fraise mesure de 2,8 mm à 3,2 mm, et **en ce que** les parties des dents s'étendant dans le sens proximal depuis le plan perpendiculaire à un axe longitudinal de la fraise de la partie de coupe côté distal, où le diamètre est à sa valeur maximale, sont inclinées relativement à l'axe longitudinal de la fraise.

2. Fraise selon la revendication 1, la partie de coupe s'étendant de l'extrémité distale à une partie de l'arbre, sans dents, laquelle partie de l'arbre se déploie vers l'extrémité proximale.

3. Fraise selon la revendication 2, la partie de l'arbre ayant le même diamètre que le premier diamètre.

4. Fraise selon la revendication 2, le diamètre de la partie de l'arbre étant supérieur au premier diamètre.

5. Fraise selon une quelconque des revendications précédentes, la partie de l'extrémité distale de la partie de coupe est en forme de goutte.

6. Fraise selon une quelconque des revendications précédentes, la longueur de la partie de l'extrémité distale de la partie de coupe mesurant moins de 0,2 fois la longueur de la partie cylindrique de la partie de coupe.

7. Fraise selon une quelconque des revendications précédentes, la fraise étant réalisée exclusivement à partir d'une tige unique en carbure de tungstène.

8. Fraise selon une quelconque des revendications précédentes, la fraise étant réalisée en meulant une tige unique en carbure de tungstène, pour réaliser une ébauche possédant une partie cylindrique du premier diamètre, à partir de laquelle sera réalisée la partie de coupe cylindrique et une partie d'extrémité distale avec un deuxième diamètre supérieur au premier diamètre, à partir de laquelle sera réalisée ensuite la partie de coupe à l'extrémité distale, les dents étant ensuite découpées dans l'ébauche.

9. Fraise selon une quelconque des revendications précédentes, la partie à l'extrémité distale de la partie de coupe possédant un embout à rotule au profil hémisphérique.

10. Fraise selon une quelconque des revendications précédentes, la partie de coupe se déployant plus de 25 mm depuis l'extrémité distale.

11. Fraise selon une quelconque des revendications précédentes, le deuxième diamètre mesurant de 1,08 à 1,12 fois le premier diamètre.

12. Fraise selon une quelconque des revendications précédentes, le premier diamètre mesurant de 5,7 mm à 6,3 mm.

13. Fraise selon une quelconque des revendications précédentes, la fraise mesurant de 55 mm à 65 mm de long.

14. Procédé de forage d'une serrure à cylindre à broches (1) **caractérisée en ce que** l'on utilise une fraise (13) selon une quelconque des revendications précédentes, le procédé comportant le fraisage de la serrure (1) à l'aide de la fraise (13) dans une direction axiale le long d'une ligne parallèle à une rangée de broches (5, 9), puis le déplacement de la fraise (13) latéralement pour former une fente dans la zone des broches (5, 9) et alignée avec les broches.
